Europäisches Patentamt

European Patent Office

Office européen des brevets

(19)

(11) Veröffentlichungsnummer: **0 009 553**
A1

(12) **EUROPÄISCHE PATENTANMELDUNG**

(21) Anmeldenummer: **79102504.2**

(22) Anmeldetag: **18.07.79**

(51) Int. Cl.³: **F 24 J 3/02**

(30) Priorität: **15.09.78 DE 2840238**

(43) Veröffentlichungstag der Anmeldung:
**16.04.80 Patentblatt 80/8**

(84) Benannte Vertragsstaaten:
**AT BE CH FR GB IT LU NL SE**

(71) Anmelder: **ELPAG AG CHUR**
**Quaderstrasse 11**
**CH-7001 Chur(CH)**

(72) Erfinder: **Bleckmann, Ingo, Dipl.-Ing., Dr. mont.**
**Ignaz-Rieder-Kai 11**
**A-5020 Salzburg(AT)**

(74) Vertreter: **Liedl, Gerhard et al,**
**Steinsdorfstrasse 21-22**
**D-8000 München 22(DE)**

(54) **Bauelement für Solarheizungen.**

(57) Bauelement für Solarheizungen, Wärmeaustausch- oder Verdampfervorrichtungen, bei dem an einem Rohr (2), das zur Führung flüssiger oder gasförmiger Wärmeaustauschmedien bestimmt ist, eine Schar von parallel zueinander verlaufenden Drähten (1) oder einem Gitter (5) durch Schweißung oder Einpressen befestigt ist und bei dem die Rohre (2) an einem blechförmigen Träger (4) durch Einpressen oder Anschweissen der Drähte in bzw. an demselben befestigt wird.

EP 0 009 553 A1

Fig.3

- 1 -

## Bauelement für Solarheizungen

Die Erfindung betrifft ein Bauelement für Solarheizungen oder ähnliche Wärmeaustausch- oder Verdampfervorrichtungen, bestehend aus einem blechförmigen Träger und einem an den Träger befestigten Rohrsystem.

Bauelemente der angegebenen Gattung werden überwiegend für Dachkonstruktionen verwendet. Anstelle eines üblichen Blechdaches werden also Bleche verwendet, die an ihrer Unterseite Rohre tragen. Die streifenförmigen Blechbahnen werden in üblicher Weise durch Umbördeln ihrer Seitenkanten mittels eines fortlaufenden Werkzeuges wasserdicht miteinander verbunden, wie dies bei anderen Blechdächern ebenfalls üblich ist. Da derartige Bauelemente also mit den üblichen Werkzeugen und mit der üblichen handwerklichen Technik verlegt werden können und da eine nach außen geschlossene Blechhaut gebildet wird, werden derartige Konstruktionen bevorzugt, z.B. gegenüber Konstruktionen, bei denen die Rohre durch Eindrücken in Nuten und dergleichen lose mit der Blechhaut verbunden sind. Das Rohrsystem derartiger Anlagen wird nun von einem Wärmeaustauschmedium durchströmt, also von Wasser, Sole oder auch im Wärme-

E 85

pumpenbetrieb von bei Normaldruck gasförmigen Medien z.B. Frigen oder dessen im Brandfall ungiftige Austauschstoffe. Gerade im
Verdampferbetrieb könnten jedoch erhebliche Drücke in dem Rohrsystem auftreten. Leckstellen wirken sich katastrophal aus, da dann
das gesamte Wärmeaustauschmedium im Laufe der Zeit durch die
Leckstelle in das Dach austritt, so daß die darunterliegenden Räume
beschädigt werden. Die Befestigung der Rohre an dem blechförmigen
Träger muß dementsprechend so erfolgen, daß eine Beschädigung
oder Schwächung des Rohres vermieden wird.

Zur Befestigung bieten sich nun einerseits Löt- oder Schweißverfahren und andererseits die Befestigung mittels Schellen oder ähnlichen
Einrichtungen an. Löt- oder Schweißverfahren haben den großen
Nachteil, daß sie sehr teuer sind, daß sie in Hinsicht auf die Wärmeaustauschbedingungen optimalerMaterialien wie Aluminium und
Aluminiumlegierungen praktisch nicht anwendbar sind und daß durch
die erforderliche Hitze oder Stromeinwirkung der Rohrmantel oder
die Verbindungsstelle bei Nahtröhren aufgeschweißt oder beschädigt
werden kann. Bei der Verbindung mittels Schellen oder ähnlichen
Einrichtungen ergibt sich ein sehr schlechter Wärmeübergang von
dem blechförmigen Träger auf das Rohr. Außerdem müssen die
Schellen ebenfalls mittels Lötverfahren oder Schweißverfahren an
dem blechförmigen Träger befestigt werden, wodurch die Blechhaut
geschwächt wird.

Der Erfindung liegt nun die Aufgabe zugrunde, ein Bauelement für
den in Rede stehenden Zweck vorzuschlagen, bei dem das Rohr an
dem blechförmigen Träger so befestigt ist, daß eine Beschädigung
oder Schwächung des Rohres bei der Befestigung ausgeschlossen

E 85

0009553

wird, im Gegenteil die Radialbelastbarkeit des Rohres erheblich gesteigert wird, und bei dem andererseits ein überraschend guter Wärmeübergang erzielt wird. Die Befestigung des Rohrsystems an dem blechförmigen Träger soll weiterhin mit erheblich geringeren Kosten verbunden sein als bei bekannten Verfahren.

Diese Aufgabe wurde durch die im Kennzeichenbegriff des Hauptanspruchs aufgeführten Merkmale gelöst. In den Unteransprüchen sind bevorzugte Ausführungsformen beschrieben.

Die beiliegenden Zeichnungen dienen der weiteren Erläuterung des Bauelementes gemäß der Erfindung.

Es zeigen:

Fig. 1        eine Draufsicht auf ein Zwischenprodukt bei der Herstellung des Bauelementes;

Fig. 2        eine schaubildliche Ansicht einer weiteren Verarbeitungsstufe;

Fig. 3        eine Unteransicht des Bauelementes vor dem Einpressen der Drähte;

Fig. 4        eine Seitenteilansicht eines Bauelementes, bei dem das Rohr unter Verwendung eines Gitters auf dem blechförmigen Träger befestigt ist;

Fig. 5        einen Schnitt längs der Linie V-V in Fig. 4.

E 85

- 4 -

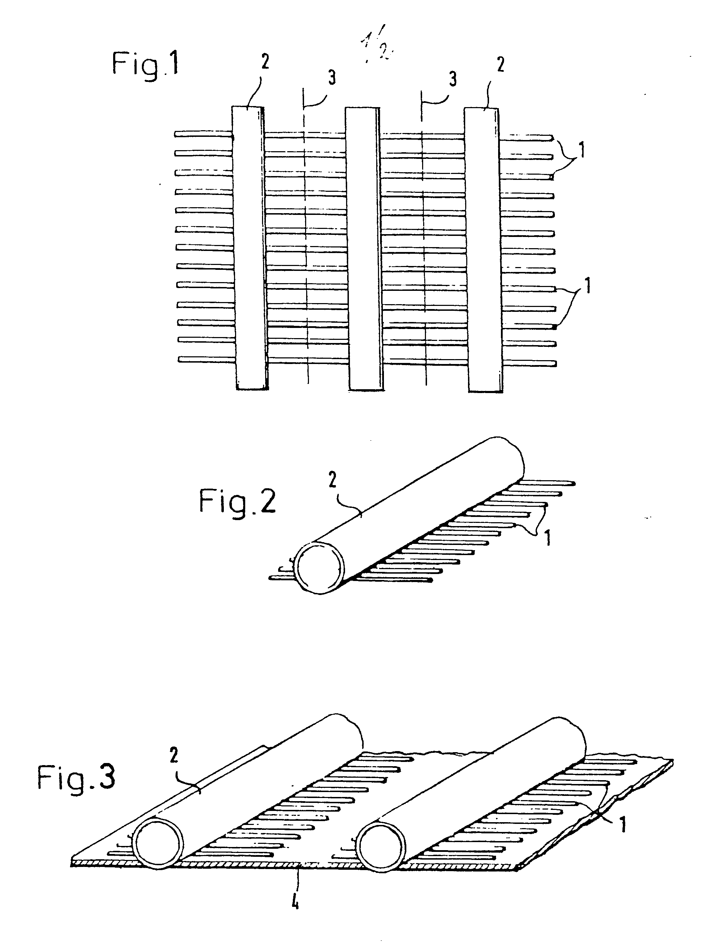

Zur Herstellung der in den Figuren 1 - 3 dargestellten Ausführungsform eines Bauelementes wird eine Schar 1 von parallelen Drähten
erzeugt. Der Abstand der Drähte voneinander kann beispielsweise
10 mm betragen. Die Drähte besitzen einen Durchmesser von etwa
1-2 mm. Die Schar 1 enthält im allgemeinen mehr als 100 Drähte,
die vorzugsweise von getrennten Vorratsspulen abgewickelt und
durch entsprechende Führungen gezogen werden.

Auf die Schar 1 der parallelen Drähte werden nun quer Rohre 2 im
gleichmäßigen Abstand aufgelegt. Die Rohre 2 werden an den einen
Pol einer Punktschweißeinrichtung angeklemmt. Mit dem anderen
Pol der Punktschweißeinrichtung werden die Drähte 1 verbunden. Dadurch entstehen nun punktförmige Schweißverbindungen zwischen den
Drähten 1 und dem Mantel der Rohre 2. Bei dieser Schweißtechnik
ist eine Gefährdung der Rohre 2 ausgeschlossen, da die Erhitzung
zwangsläufig nur punktweise erfolgt. Es besteht also keine Gefahr,
daß der Rohrmantel oder bei Nahtrohren die Nahtverbindung aufgeschweißtwird, insbesondere wenn die Rohrnaht im Sinne der Darstellung der Fig. 1 oben liegt. Nach diesem Arbeitsgang werden die
Drähte längs der Linien 3 in Fig. 1 durchschnitten, wodurch die in
Fig. 2 dargestellten Zwischenprodukte entstehen. Diese können nun,
wie in Fig. 3 dargestellt, in dem gewünschten Abstand auf einen
blechförmigen Träger 4 aufgelegt werden. Nunmehr werden vorzugsweise im Walzendurchlauf die abstehenden Enden der Drähte 1 in den
blechförmigen Träger 4 eingepreßt. Wenn der Abstand der Drähte 1
voneinander im Verhältnis zu dem Durchmesser der Drähte gering
ist, tritt dabei ein Verankerungseffekt auf, d.h., der Querschnitt
der Drähte 1 wird von dem Material des blechförmigen Trägers 4
vollständig umflossen. Durch den zunehmenden Querschnitt des Drahtes wird beim Eindrücken das Material des blechförmigen Trägers 4 nach der Seite hin verdrängt und um den benachbarten Draht herumgepreßt, so daß dieser völlig in das Material eingebettet wird.

Zusätzlich zu diesem Einpreßverfahren oder anstelle desselben kann jedoch auch ein Schweißverfahren angewendet werden, wobei wiederum die Drahtenden als lokalisierte Punktschweißstellen wirken und so eine Beschädigung des Rohrmantels 2 vermieden wird. Umgekehrt können je nach den verwendeten Materialien auch die Drähte 1 in den Rohrmantel 2 eingepreßt werden, wenn Schweißverfahren überhaupt vermieden werden sollen. Letzteres trifft beispielsweise zu, wenn sowohl der blechförmige Träger 4 als auch die Rohre 2 aus Aluminium oder einer Aluminiumlegierung bestehen und dementsprechend Schweißverfahren schwierig sind.

Wird ein höherer Wärmeübergang von dem Rohr 2 auf den blechförmigen Träger 4 gewünscht, so können die in Fig. 2 dargestellten Zwischenprodukte auch umgekehrt auf den blechförmigen Träger 4 aufgelegt werden, d.h., die abstehende Drahtschar 1 befindet sich dann in einem Abstand gleich dem Rohrdurchmesser von dem blechförmigen Träger 4. Nunmehr werden in einem Preßverfahren die abstehenden Enden der Drähte 1 um das Rohr 2 herumgeschlagen und dann erst die Restlängen in den blechförmigen Träger 4 eingepreßt. Durch diese Maßnahme wird nicht nur der Wärmeübergang, sondern auch die Radialbelastbarkeit der Rohre 2 verbessert. Bei dem Biegevorgang erhalten die Drähte 1 eine gewisse Vorspannung, durch welche die Rohre 2 satt auf den blechförmigen Träger 4 aufgepreßt werden. Diese Vorspannung wirkt einem Innendruck der Rohre 2 entgegen.

E 85

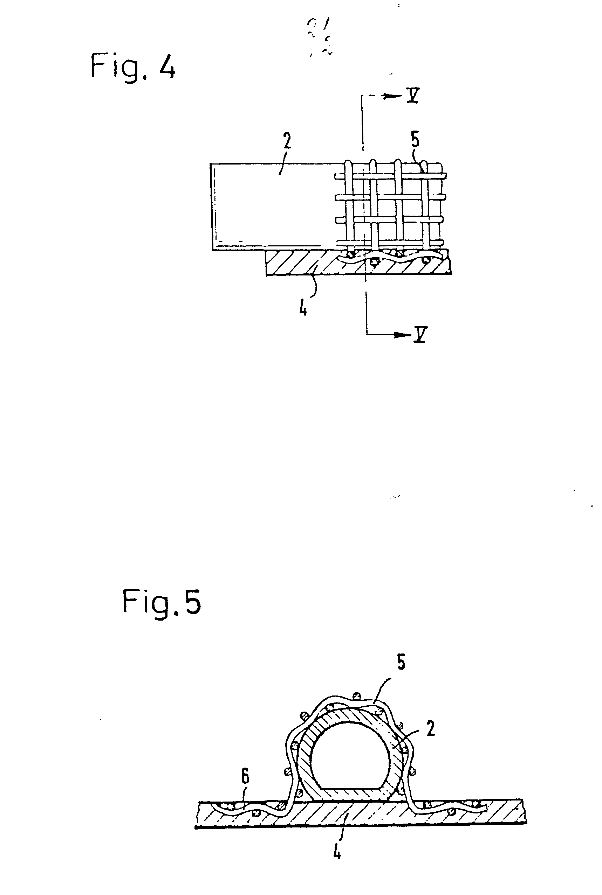

Soll der Wärmeübergang und die Radialbelastbarkeit der Rohre 2 noch weiter gesteigert werden, empfiehlt sich die in den Fig. 4 und 5 dargestellte Ausführungsform.

Bei der in den Fig. 4 und 5 dargestellten Ausführungsform wird ein Drahtgitterstreifen 5 verwendet, der um das Rohr 2 herumgepreßt wird. Die abstehenden Seitenbereiche 6 des Drahtgitterstreifens 5 werden, wie in Fig. 5 dargestellt, in den blechförmigen Träger 4 eingepreßt. Bei diesem Preßvorgang kann auch das Rohr 2 wie dargestellt verformt werden, wodurch sich eine größere Anlagefläche des Rohres an dem blechförmigen Träger 4 ergibt.

Anstelle der dargestellten Ausführungsformen können auch andere Drahtgebilde Verwendung finden, z.B. mäanderförmig oder zickzackförmig gebogene Drahtstreifen, Drahtwendeln oder dergleichen.

E 85

- 1 -

Patentansprüche:

1. Bauelement für Solarheizungen oder ähnliche Wärmeaustausch-
oder Verdampfervorrichtungen, bestehend aus einem blechförmigen Träger und einem an dem Träger befestigten Rohrsystem,
d a d u r c h  g e k e n n z e i c h n e t,  daß die Rohre (2) des Systems
am Außenmantel eine Anordnung von in geringem Abstand voneinander und im wesentlichen parallel zueinander verlaufenden Drähten (1) oder ein Gitter (5) tragen, die der Befestigung des Rohrsysystems an dem Träger (4) dienen.

2. Bauelement nach Anspruch 1, d a d u r c h  g e k e n n z e i c h n e t,
daß die Drähte (1) bzw. das Gitter (5) auf die Rohre bzw. das
Rohrsystem aufgelötet oder aufgeschweißt sind.

3. Bauelement nach Anspruch 1 und 2, d a d u r c h  g e k e n n z e i c h -
n e t,  daß die Drähte (1) in den blechförmigen Träger (4) so eingepreßt sind, daß der größte Durchmesser des Drahtes aufgrund
der Rückwirkung des benachbarten Drahtes von dem Material des
blechförmigen Trägers hinterflossen und dementsprechend der
Draht (1) in dem blechförmigen Träger (4) verankert ist.

E 85

4. Bauelement nach Anspruch 1 bis 3, dadurch gekennzeich- net, daß ein Streifen eines Drahtgitters (5) um den Rohrumfang gepreßt und, falls erforderlich, aufgeschweißt oder aufgelötet ist und daß die seitlich vom Rohr (2) abstehenden Randbereiche des Gitters (5) in den blechförmigen Träger (4) eingepreßt und/oder durch Verschweißung mit demselben befestigt sind.

E 85

**Fig.1**

**Fig.2**

**Fig.3**

# Fig. 4

# Fig. 5

## Europäisches Patentamt

**EUROPÄISCHER RECHERCHENBERICHT**

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | F 24 J 3/02 |
| | <u>FR - A - 2 324 406</u> (ELPAG)<br>* Seite 9, Zeilen 15-40; Seite 10, Zeilen 1-9; Figuren 15-19 * | 1,3 | |
| | <u>FR - A - 2 364 075</u> (ELPAG)<br>* Seite 12, Zeilen 6-40; Seite 13, Zeilen 1-26; Seite 17, Zeilen 1-14; Figuren 1,10,11,17,19,20 * | 1-4 | |
| EX | <u>EP - A - 0 004 580</u> (ELPAG)<br>* Ansprüche 1-4 * | 1-4 | **RECHERCHIERTE SACHGEBIETE (Int. Cl. 3)**<br><br>F 24 J<br>B 21 D |
| A | <u>US - A - 4 072 262</u> (GODRICK) | 1 | |
| A | <u>GB - A - 826 625</u> (PORTER) | 1 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-12-1979 | SMETS |

EPA form 1503.1  06.78